# EUROPÄISCHE PATENTSCHRIFT

(11) **EP 0 599 078 B1**
(45) Veröffentlichungstag und Bekanntmachung des Hinweises auf die Patenterteilung: **02.10.1996**
(21) Anmeldenummer: 93117520.2
(22) Anmeldetag: 28.10.1993
(51) Int. Cl.: B29C 49/50

(54) **Verfahren und Blasformstation zur Herstellung eines Hohlkörpers mit einer Öffnung im Bodenbereich**
Method and blow moulding station for production of hollow bodies with openings in the underside
Procédé et station de moulage par soufflage pour la fabrication d'un corps creux avec une ouverture dans la base

(30) Priorität: 26.11.1992 DE 4239809
(43) Veröffentlichungstag der Anmeldung: 01.06.1994
(73) Patentinhaber: KUNSTSTOFFVERARBEITUNG KOETKE KG, D-29394 Lüder/Reinstorf (DE)
(72) Erfinder: Koetke, Claus-Dieter, D-29394 Lüder/Reinstorf (DE)
(74) Vertreter: Prietsch, Reiner, Dipl.-Ing.

(56) Entgegenhaltungen:
- EP-A- 0 278 399
- DE-A- 3 723 006
- DE-B- 1 174 968
- US-A- 3 608 021
- PATENT ABSTRACTS OF JAPAN vol. 20, no. 73 (M-463)22. März 1986 & JP-A-60 217 127 (MITSUBISHI MONSANTO) 30. Oktober 1985
- PATENT ABSTRACTS OF JAPAN vol. 10, no. 70 (M-462)19. März 1986 & JP-A-60 214 924 (AIDA ENGINEERING) 28. Oktober 1985

## Beschreibung

Die Erfindung betrifft ein Verfahren zur Herstellung eines schlauchgeblasenen Kunststoffhohlkörpers mit einer zusätzlich zu seiner Halsöffnung vorgesehenen weiteren Öffnung in seinem der Halsöffnung gegenüberliegenden Bodenbereich, wobei der größte Durchmesser der weiteren Öffnung kleiner als der kleinste Durchmesser der Halsöffnung ist.

Des weiteren betrifft die Erfindung eine Blasformstation zur Durchführung dieses Verfahrens, nämlich zur Herstellung eines Hohlkörpers aus einem extrudierten Kunststoffschlauchabschnitt in einer mindestens zweiteiligen Blasform, deren Formnest die Außenkontur des Hohlkörpers bestimmt und oberhalb deren Blasöffnung ein vertikal verfahrbarer Blas- und Kalibrierdorn angeordnet ist, der in eine kalibrierende Stellung absenkbar ist, bei der eine Ringschulter des Dorns an dem über die Blasöffnung nach oben überstehenden Schlauch abdichtend anliegt.

Blasformstationen der vorgenannten Art sind allgemein bekannt. Mittels des Blas- und Kalibrierdorns, der teilweise auch als Blaspinole bezeichnet wird, kann während des Ausformens des Hohlkörpers in der Blasform auch der Innendurchmesser der Halsöffnung, z.B. des Gewindehalses einer Kunststoffflasche kalibriert werden. Technische Artikel, die als schlauchgeblasene Kunststoffhohlkörper herstellbar sind, benötigen häufig in ihrem der Halsöffnung gegenüberliegenden Bodenbereich eine weitere kalibrierte Öffnung. Diese weitere Öffnung kann konzentrisch aber auch exzentrisch zu der Längsachse des Hohlkörpers liegen. Oft hat die weitere Öffnung Kreisquerschnitt. Je nach späterem Verwendungszweck kommen aber auch beliebige andere Querschnittsformen vor. Bisher mußte eine derartige weitere kalibrierte Öffnung im Bodenbereich eines technischen Kunststoffhohlkörpers nach dessen Entformen in einem gesonderten Bearbeitungsschritt, z.B. durch Stanzen, Bohren oder Fräsen, hergestellt werden. Lediglich nicht kalibrierte Öffnungen konnten bereits in der Blasform selbst, z.B. mittels entsprechender Schneidkanten, durch rotierende Messer oder dergleichen erzeugt werden, erforderten aber wegen der unvermeidlichen Materialanhäufungen und/oder -verdrängungen eine Nachbearbeitung wie Entgraten, Butzenentfernung und dgl..

Der Erfindung liegt die Aufgabe zugrunde, eine Verfahren und eine Blasformstation der einleitend angegeben Gattungen zu schaffen, die es gestatten, eine kalibrierte Bodenöffnung in einem Kunststoffhohlkörper in einem Arbeitsschritt während dessen Ausformens in der Blasform zu erzeugen.

Verfahrensmäßig ist diese Aufgabe dadurch gelöst, daß die weitere Öffnung während oder nach dem Fertigblasen des Hohlkörpers in der Blasform durch Materialverdrängung vom Inneren des Hohlkörpers nach außen mittels eines gleichzeitig als Stanzwerkzeug ausgebildeten Blasdorns erzeugt wird. Der Kern der Erfindung liegt mithin darin, dem Dorn neben seiner Blas- und Kalibrierfunktion als dritte Funktion diejenige eines Stanzwerkzeuges zuzuordnen.

Die Herstellung der weiteren Öffnung im Bodenbereich des Hohlkörpers vereinfacht sich, wenn gemäß einer Weiterbildung des vorgeschlagenen Verfahrens der Blasdorn, soweit er als Stanzwerkzeug verwendet wird, das ausgestanzte Material in einen verlorenen Blasraum innerhalb der Blasform verdrängt.

Die zur Lösung der angegebenen Aufgabe vorgeschlagene Blasformstation zeichnet sich dadurch aus, daß der Dorn sich in seiner abgesenkten Stellung durch das Formnest hindurch erstreckt und in einer Zentrierspitze verringerten Durchmessers endet, die mit einem jenseits des Bodens des Hohlkörpers ausgebildeten, in das Formnest einspringenden Zentrierbund der Blasform zusammenwirkt, daß der Dorn oberhalb seiner Zentrierspitze eine als Stanzstempel wirkende Schrägschulter hat, die mit einer in der Blasform ausgebildeten, in Höhe der zu schaffenden Bodenöffnung des Hohlkörpers vorgesehenen Quetschkante zusammenwirkt, und daß auf dem Dorn eine Hülse sitzt, die die abdichtende Ringschulter trägt, mit der sie bei in die Blasform eingefahrenem Dorn an dem über die Blasöffnung der Form überstehenden Schlauchende abdichtend anliegt.

Nach diesem Vorschlag wird also der Dorn wesentlich länger als im Stand der Technik ausgebildet, erhält nämlich die Form und Funktion eines Stanzstempels, der in Höhe der zu schaffenden, kalibrierten Bodenöffnung des Hohlkörpers mit einer umlaufenden Quetschkante der Blasform zusammenwirkt. Die zur Abdichtung der Form während des Ausblasens des Hohlkörpers unerläßliche Ringschulter des Dorns und gegebenenfalls dessen die Halsöffnung kalibrierender Teil sind hingegen an einer eigens hierfür vorgesehenen, auf dem Dorn sitzenden Hülse ausgebildet.

Auf diese Weise ist es möglich, bei technischen Blasformteilen wie z.B. Achsmanschetten, Faltenbälgen, Schächten, Kanälen und Behältern gegenüber der Halsöffnung eine genau tolerierte Bodenöffnung anzubringen, die einen beliebigen, auch asymmetrischen Querschnitt haben kann, solange die Voraussetzung erfüllt ist, daß der Querschnitt der Bodenöffnung, projiziert in Richtung der Längsachse des Hohlkörpers, in dessen Halsöffnung einbeschrieben werden kann.

Gemäß einer bevorzugten Ausführungsform ist die Hülse auf dem Dorn verschiebbar und abgedichtet angeordnet. Nach dem üblichen Vorblasen kann daher die Hülse zum Abdichten und dementsprechend zum vollen Aufbau des Blasdrucks bereits auf den über die Blasöffnung der Form kragenartig nach oben überstehenden Schlauch aufgesetzt werden, bevor der Dorn seine Stanzstellung erreicht hat.

Auf einen aktiven Antrieb zur Verschiebung der Hülse relativ zu dem Dorn kann verzichtet werden, wenn auf dem Dorn oberhalb der Hülse eine Schraubenfeder angeordnet wird, die die Hülse in Richtung der Blasöffnung belastet. Durch geeignete Wahl der Härte dieser Schraubenfeder und gegebenenfalls durch eine geeignete Vorspannung derselben läßt sich die Kraft, mit der die Ringschulter der Hülse gegen den überstehenden Kragen des Schlauches vor und während der Stanzbewegung des Dorns anliegt, hinreichend genau vorgegeben.

Der Stanzvorgang erfolgt im noch thermoplastischen Zustand des Schlauchmaterials. Zur Aufnahme des durch den Stanzvorgang von innen nach außen verdrängten Schlauchmaterials sollte daher das Formnest zwischen der Quetschkante und dem Zentrierbund der Blasform einen entsprechend bemessenen, verlorenen Blasraum umfassen.

Da auch durch den dem Stanzvorgang vorangehenden Zentriervorgang Schlauchmaterial verdrängt wird, sollte das Formnest einen weiteren, verlorenen Blasraum zur Aufnahme auch dieses verdrängten Materials aufweisen.

Üblicherweise hat der Blasdorn einen axialen Blasluftkanal, der in einer Blasluftöffnung in der Dornstirnfläche endet. Da nach dem Absenken des Blasdorns in seine Zentrierstellung diese Blasluftöffnung nicht mehr frei mit dem Forminnenraum kommuniziert, der Blasluftdruck jedoch über den Zentrier- und auch über den nachfolgenden Stanzvorgang hinaus noch eine gewissen Zeit aufrechterhalten werden muß, ist es vorteilhaft, wenn der Blasdorn oberhalb des Hohlkörperbodens mindestens eine seitliche Blasluftaustrittsöffnung hat.

Das Verfahren nach der Erfindung wird nachfolgend anhand der eine Blasformstation zur Durchführung dieses Verfahrens schematisch vereinfacht veranschaulichenden Zeichnung erläutert. Es zeigt:
- Fig. 1: eine Seitenansicht einer Formhälfte mit einem Hohlkörper in Form eines Faltenbalges bei eingefahrenem Dorn,
- Fig. 2: einen Querschnitt durch die vollständige, geschlossene Blasform in Höhe der Linie II-II in Fig. 1,
- Fig. 3: den Bodenbereich der Formhälfte nach Fig. 1 in vergrößertem Maßstab mit dem Dorn in Zentrierstellung und
- Fig. 4: eine Darstellung entsprechend Fig. 3, jedoch mit dem Dorn in seiner Stanzstellung.

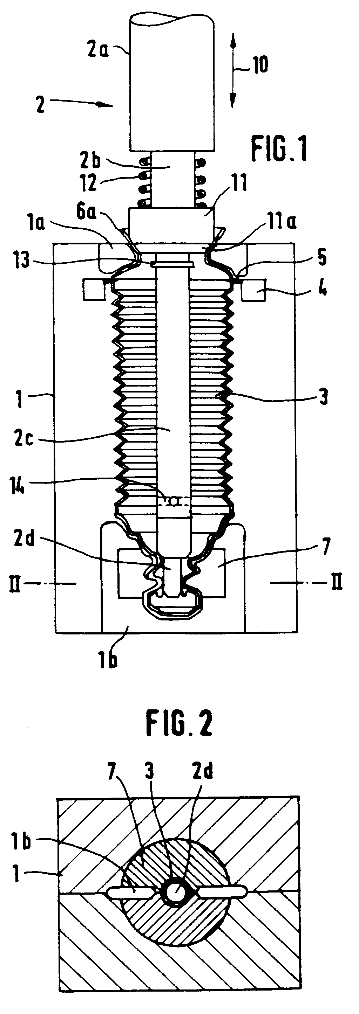

Die in Figur 1 dargestellte Blasformstation umfaßt eine Blasformhälfte 1, in deren Formnest sich ein mittels eines Dornes 2 aus einem zuvor extrudierten und in die Form übernommenen Kunststoffschlauchabschnitt bereits weitgehend fertiggeblasener Kunststoffhohlkörper 3 in Form eines Faltenbalges befindet. Der fertige Faltenbalg hat eine obere Öffnung ("Halsöffnung"), deren Durchmesser gleich dem Faltenbalgdurchmesser ist. In einer Ringnut 4 in der Formhälfte 1 sind daher an sich bekannte und deshalb hier nur angedeutete rotierende Messer 5 angeordnet, die nach dem Ausblasen und Abkühlen des Faltenbalges in der Form den Abfallanteil 6 des Kunststoffschlauches abtrennen. Der Kunststoffschlauch wird nahezu mit dem Durchmesser des fertigen Faltenbalges extrudiert. Die Einschnürung im Halsbereich entsteht beim Schließen der Formhälften. Zur Aufnahme des abgequetschten Schlauchmaterials haben beide Formhälften die hier nur für die dargestellte Formhälfte sichtbare Freifräsung 1a. Im Bodenbereich des Faltenbalges entsteht eine gleichartige Überquetschung. Das abgequetschte Material findet Platz in einer entsprechenden Freifräsung 1b, vergleiche auch Fig. 2. Die Blasform besteht vorzugsweise aus Aluminium. Da der im Bodenbereich der Form vorgesehene Zentrierbund und die Quetschkante (siehe unten) verhältnismäßig hohen Belastungen ausgesetzt sind, hat die Form in diesem Bereich einen entsprechend der Formtrennebene geteilten, gegebenenfalls gehärteten Stahleinsatz 7.

Der Dorn 2 ist entsprechend dem Doppelpfeil 10 in vertikaler Richtung verfahrbar. Der Hub ist größer als die Tiefe des Formnestes. Der Dorn umfaßt ein Oberteil 2a, einen kurzen Schaft 2b, einen langen Schaft 2c und eine Zentrierspitze 2d. Auf dem langen Schaft 2c sitzt verschieblich eine Hülse 11, die durch eine vorgespannte Schraubendruckfeder 12 in Richtung einer Ringschulter 13 nahe dem oberen Ende des langen Schaftes 2c belastet wird und in der Ruhestellung gegen diese Ringschulter 13 anliegt. In der gezeichneten Blasstellung wird die Hülse 11 jedoch durch die Schraubenfeder 12 gegen den über die Formhälfte 1 überstehenden Kragen 6a des Schlauches 6 gedrückt und dichtet daher mit ihrer Ringschulter 11a den Innenraum der Form bzw. des Hohlkörpers 3 nach außen ab. Die Blasluft wird wie üblich über einen hier nicht dargestellten, axialen Kanal dem Dorn 2 zugeführt und tritt über eine Öffnung in der Stirnfläche der Zentrierspitze 2d sowie zwei sich kreuzende Querbohrungen 14 in dem langen Dornschaft 2c aus.

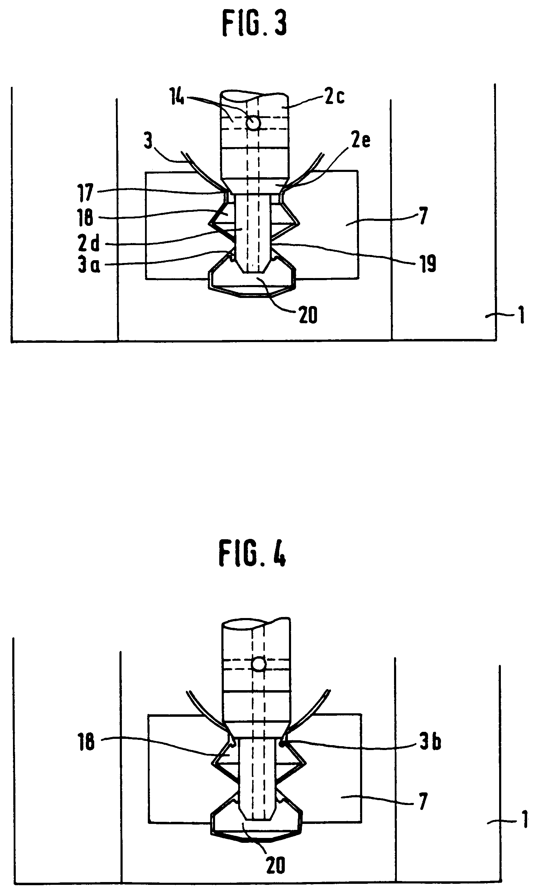

Der Hohlkörper 3 soll in Höhe der Linie O in Fig. 3 eine kalibrierte Bodenöffnung erhalten. Hierzu weist die Form 1 im Bereich des Einsatzes 7 eine umlaufende Stanz- oder Quetschkante 17 auf, während der Dorn am Übergang von seinem langen Schaft 2c zu seiner Zentrierspitze 2d eine Schrägschulter 2e hat. Da durch den Stanzvorgang Material vom Inneren des Hohlkörpers 3 nach außen verdrängt wird, folgt auf die Quetschkante 17 ein verlorener Blasraum 18 zur Aufnahme dieses verdrängten Schlauchmaterials. Die Herstellung dieser kalibrierten Öffnung setzt eine genaue Zentrierung des Dorns voraus. Deshalb hat die Form 1 im Bereich ihres Einsatzes 7 des weiteren einen Zentrierbund 19, der mit der Zentrierspitze 2d zusammenwirkt. Da auch bei dem Zentriervorgang Material verdrängt wird, folgt auf den Zentrierbund 19 ein weiterer verlorener Blasraum 20.

Figur 3 zeigt den Dorn nach dem Absenken in seine Zentrierstellung und kurz vor Beginn des Stanzvorganges. Man erkennt das durch die Zentrierung in Richtung des verlorenen Blasraumes 20 verdrängte Material 3a des Hohlkörpers 3.

Figur 4 zeigt den Dorn in seiner vollständig abgesenkten Stellung, also nach dem die kalibrierte Öffnung im Boden des Hohlkörpers 3 schaffenden Stanzvorgang. Hier erkennt man das durch letzteren in den verlorenen Blasraum 18 verdrängte Schlauchmaterial 3b.

## Patentansprüche

1. Verfahren zur Herstellung eines schlauchgeblasenen Kunststoffhohlkörpers mit einer zusätzlich zu seiner Halsöffnung vorgesehenen weiteren Öffnung in seinem der Halsöffnung gegenüberliegenden Bodenbereich, wobei der größte Durchmesser der weiteren Öffnung kleiner als der kleinste Durchmesser der Halsöffnung ist, **dadurch gekennzeichnet**, daß die weitere Öffnung während oder nach dem Fertigblasen des Hohlkörpers (3) in der Blasform (1) durch Materialverdrängung vom Inneren des Hohlkörpers (3) nach außen mittels eines gleichzeitig als Stanzwerkzeug (17) ausgebildeten Blasdorns (2) erzeugt wird.

2. Verfahren nach Anspruch 1, dadurch gekennzeichnet, daß das Stanzwerkzeug (17) das ausgestanzte Material (3a) in einen verlorenen Blasraum (20) verdrängt.

3. Blasformstation zur Herstellung eines Hohlkörpers aus einem extrudierten Kunststoffschlauchabschnitt in einer mindestens zweiteiligen Blasform (1), deren Formnest die Außenkontur des Hohlkörpers (3) bestimmt und oberhalb deren Blasöffnung ein vertikal verfahrbarer Blas- und Kalibrierdorn (2a) angeordnet ist, der in eine kalibrierende Stellung absenkbar ist, bei der eine Ringschulter des Dorns an dem über die Blasöffnung der Blasform nach oben kragenartig überstehenden Schlauch (6) abdichtend anliegt, insbesondere zur Durchführung des Verfahrens nach Anspruch 1 oder 2, **dadurch gekennzeichnet**, daß der Dorn (2) sich in seiner abgesenkten Stellung durch das Formnest hindurch erstreckt und in einer Zentrierspitze (2d) verringerten Durchmessers endet, die mit einem jenseits des Bodens des Hohlkörpers (3) ausgebildeten, in das Formnest einspringenden Zentrierbund (19) der Blasform (1) zusammenwirkt, daß der Dorn oberhalb seiner Zentrierspitze (2d) eine als Stanzstempel wirkende Schrägschulter (2e) hat, die mit einer in der Blasform (1) ausgebildeten, in Höhe der zu schaffenden Bodenöffnung des Hohlkörpers (3) vorgesehenen Quetschkante (17) zusammenwirkt, und daß auf dem Dorn eine Hülse (11) sitzt, die die abdichtende Ringschulter (11a) trägt, mit der sie bei in die Blasform (1) eingefahrenem Dorn (2) an dem über die Blasöffnung überstehenden Schlauchende anliegt.

4. Blasformstation nach Anspruch 3 dadurch gekennzeichnet, daß die Hülse (11) auf dem Dorn (12) verschiebbar und abgedichtet angeordnet ist.

5. Blasformstation nach Anspruch 3 oder 4, dadurch gekennzeichnet, daß auf dem Dorn (2) oberhalb der Hülse (11) eine Schraubenfeder (12) angeordnet ist, die die Hülse in Richtung der Blasöffnung belastet.

6. Blasformstation nach einem der Ansprüche 3 bis 5, dadurch gekennzeichnet, daß das Formnest zwischen der Quetschkante (17) und dem Zentrierbund (19) einen zur Aufnahme des durch den Stanzvorgang verdrängten Schlauchmaterials bestimmten verlorenen Blasraum (18) umfaßt.

7. Blasformstation nach einem der Ansprüche 3 bis 6, dadurch gekennzeichnet, daß das Formnest einen zur Aufnahme des durch den Zentriervorgang verdrängten Schlauchmaterials bestimmten weiteren verlorenen Blasraum (20) umfaßt.

8. Blasformstation nach einem der Ansprüche 3 bis 7, dadurch gekennzeichnet, daß der Blasdorn (2) oberhalb des Hohlkörperbodens mindestens eine seitliche Blasluftaustrittsöffnung (14) hat.

## Claims

1. A process for producing a tube-blown plastics hollow body with, in addition to its neck opening, a further opening in its bottom region which is opposite the neck opening, wherein the largest diameter of the further opening is smaller than the smallest diameter of the neck opening, characterised in that the further opening is produced during or after finishing blowing of the hollow body (3) in the blow moulding mould (1) by displacement of material from the interior of the hollow body (3) outwardly by means of a blowing bar (2) which at the same time is in the form of a stamping tool (17).

2. A process according to claim 1 characterised in that the stamping tool (17) displaces the stamped-out material (3a) into a dead blowing space (20).

3. A blow moulding station for producing a hollow body from an extruded plastics tube portion in an at least two-part blow moulding mould (1) whose mould cavity determines the external contour of the hollow body (3) and above whose blowing opening is arranged a vertically displaceable blowing and calibration bar (2a) which can be lowered into a calibrating position in which an annular shoulder of the bar bears sealingly against the tube (6) which projects collar-like upwardly beyond the blowing opening of the blow moulding mould, in particular for carrying out the process according to claim 1 or claim 2, characterised in that the bar (2) extends in its lowered position through the mould cavity and terminates in a centering tip (2d) of reduced diameter, which co-operates with a centering collar (19) of the blow moulding mould (1), which collar is provided beyond the bottom of the hollow body (3) and projects into the mould cavity, that above the centering tip (2d) the bar has an inclined shoulder (2e) which acts as a stamping punch and which co-operates with a squeeze edge (17) which is provided in the blow moulding mould (1) and which is disposed at the height of the bottom opening to be provided in the hollow body (3), and that disposed on the bar is a sleeve (11) which carries the sealing annular shoulder (11a) with which, when the bar (2) is introduced into the blow moulding mould (1), the sleeve bears against the end of the tube which projects above the blowing opening.

4. A blow moulding station according to claim 3 characterised in that the sleeve (11) is arranged sealingly and displaceably on the bar (2).

5. A blow moulding station according to claim 3 or claim 4 characterised in that arranged on the bar (2) above the sleeve (11) is a coil spring (12) which urges the sleeve in the direction of the blowing opening.

6. A blow moulding station according to one of claims 3 to 9 characterised in that the mould cavity includes between the squeeze edge (17) and the centering collar (19) a dead blowing space (18) which is intended to receive the tube material which is displaced by the stamping operation.

7. A blow moulding station according to one of claims 3 to 6 characterised in that the mould cavity includes a further dead blowing space (20) which is intended to receive the tube material which is displaced by the centering operation.

8. A blow moulding station according to one of claims 3 to 7 characterised in that above the bottom of the hollow body the blowing bar (2) has at least one lateral blowing air outlet opening (14).

## Revendications

1. Procédé de fabrication d'un corps creux en matière plastique soufflé en tube, possédant une ouverture additionnelle prévue en supplément de son ouverture de col, dans sa région de fond située à l'opposé de l'ouverture de col, le diamètre maximum de l'ouverture additionnelle étant plus petit que le diamètre minimum de l'ouverture de col, caractérisé en ce que l'ouverture additionnelle est produite pendant ou après le soufflage de finition du corps creux (3), dans le moule de soufflage (1) par refoulement de la matière de l'intérieur du corps creux (3) vers l'extérieur au moyen d'un mandrin de soufflage (2) qui forme en même temps un outil de découpage (17).

2. Procédé selon la revendication 1, caractérisé en ce que l'outil de découpage (17) refoule la matière découpée (3a) dans une chambre de soufflage perdue (20).

3. Station de moulage par soufflage pour la fabrication d'un corps creux à partir d'un tronçon de tube de matière plastique extrudée dans un moule de soufflage (1) en au moins deux parties dont l'empreinte détermine le contour extérieur du corps creux (3), cependant qu'au-dessus de l'ouverture de soufflage, est disposé un mandrin de soufflage et de calibrage (2a) mobile dans la direction verticale et qui peut être abaissé à une position de calibrage dans laquelle un épaulement annulaire du mandrin est appliqué à joint étanche contre le tube (6) qui déborde vers le haut au-delà de l'ouverture de soufflage du moule de soufflage, notamment pour la mise en oeuvre du procédé selon la revendication 1 ou 2, caractérisé en ce que le mandrin (2) s'étend à travers l'empreinte de moulage dans sa position abaissée et se termine par une pointe de centrage (2d) de diamètre réduit qui coopère avec un épaulement de centrage (19) du moule de soufflage (1) formé au-delà du fond du corps creux (3) et qui fait saillie dans l'empreinte de moulage, en ce qu'au-dessus de sa pointe de centrage (2d), le mandrin possède un épaulement oblique (2c) se comportant comme un poinçon de découpage, qui coopère avec une arête d'écrasement (17) formée dans le moule de soufflage (1), prévue à la hauteur de l'ouverture de fond du corps creux (3) qu'il s'agit de créer, et en ce que, sur le mandrin, est disposé un manchon (11) qui porte l'épaulement annulaire (11a) formant joint étanche par lequel, lorsque le mandrin (2) est enfoncé dans le moule de soufflage (1), il s'applique à joint étanche contre l'extrémité du tube qui déborde au-delà de l'ouverture de soufflage du moule.

4. Station de moulage par soufflage selon la revendication 3, caractérisé en ce que le manchon (11) est monté coulissant et à joint étanche sur le mandrin (12).

5. Station de moulage par soufflage selon la revendication 3 ou 4, caractérisé en ce que, sur le mandrin (2), au-dessus du manchon (11), est agencé un ressort hélicoïdal (12) qui sollicite le manchon en direction de l'ouverture de soufflage.

6. Station de moulage par soufflage selon une des revendications 3 à 5, caractérisé en ce que l'empreinte de moulage comprend, entre l'arête d'écrasement (17) et le collet de centrage (19), une chambre de soufflage perdue (18) destinée à recevoir la matière du tube qui est refoulée par l'opération de découpage.

7. Station de moulage par soufflage selon une des revendications 3 à 6, caractérisé en ce que l'empreinte comprend une autre chambre de soufflage perdue (20) destinée à recevoir la matière du tube refoulée par l'opération de centrage.

8. Station de moulage par soufflage selon une des revendications 3 à 7, caractérisé en ce que le mandrin de soufflage (2) possède au moins une ouverture latérale de sortie d'air de soufflage (14) au-dessus du fond du corps creux.
